# EUROPÄISCHE PATENTANMELDUNG

(11) **EP 1 519 465 A1**
(43) Veröffentlichungstag der Anmeldung: **30.03.2005**
(21) Anmeldenummer: 04103761.5
(22) Anmeldetag: 05.08.2004
(51) Int. Cl.: H02H 9/00, H02P 1/16

(54) **Anordnung zur Prüfung einer Schaltungsanordnung**

(30) Priorität: 23.09.2003 DE 10344054
(71) Anmelder: SIEMENS AKTIENGESELLSCHAFT, 80333 München (DE)
(72) Erfinder: Bay, Wolfgang, 65936, Frankfurt (DE); Fischer, Patrick, 63454, Hanau (DE); Henninger, Michael, 65779, Kelkheim (DE); Hexamer, Bernd, 55566, Meddersheim (DE); Kretschmar, Sven, 65462, Gustavsburg (DE); Schäfer, Patric, 55459, Grolsheim (DE)

(57) **Zusammenfassung**

Bei einer Anordnung zur Prüfung einer Schaltungsanordnung mit einer Leistungsendstufe, insbesondere für Elektromotoren mit hoher Stromaufnahme, wobei die Leistungsendstufe und mindestens ein Puffer-Kondensator über einen steuerbaren Schalter mit einer Betriebsspannungsquelle verbunden sind, wobei eine einen begrenzten Strom liefernde Stromquelle unter Umgehung des steuerbaren Schalters an dem mindestens einen Kondensator angeschlossen ist und wobei eine Verzögerungseinrichtung vorgesehen ist, die den steuerbaren Schalter erst einschaltet, wenn der mindestens eine Kondensator mit Hilfe der Stromquelle etwa auf die Betriebsspannung aufgeladen ist, sind Mittel zur Messung des Spannungsverlaufs am Kondensator und zur Erzeugung einer Fehlermeldung, wenn der Spannungsverlauf außerhalb eines vorgegebenen Bereichs liegt.

## Beschreibung

Die Erfindung betrifft eine Anordnung zur Prüfung einer Schaltungsanordnung mit einer Leistungsendstufe, insbesondere für Elektromotoren mit hoher Stromaufnahme, wobei die Leistungsendstufe und mindestens ein Puffer-Kondensator über einen steuerbaren Schalter mit einer Betriebsspannungsquelle verbunden sind, wobei eine einen begrenzten Strom liefernde Stromquelle unter Umgehung des steuerbaren Schalters an dem mindestens einen Kondensator angeschlossen ist und wobei eine Verzögerungseinrichtung vorgesehen ist, die den steuerbaren Schalter erst einschaltet, wenn der mindestens eine Kondensator mit Hilfe der Stromquelle etwa auf die Betriebsspannung aufgeladen ist.

Derartige Schaltungsanordnungen, die beispielsweise durch DE 100 57 156 A1 bekannt geworden sind, enthalten oft sehr große Puffer-Kondensatoren, um Einschaltströme der Leistungsendstufe vom Versorgungsnetz, insbesondere eines Kraftfahrzeugs, fernzuhalten. Die beim Einschalten der Puffer-Kondensatoren erforderlichen Ladeströme werden bei diesen Schaltungen begrenzt. Durch Fehler in der Schaltungsanordnung, beispielsweise durch mangelnden Kontakt des Puffer-Kondensators oder eines von mehreren Puffer-Kondensatoren, kann die beabsichtigte Wirkung der Schaltungsanordnung beeinträchtigt oder vollständig verhindert werden.

Aufgabe der vorliegenden Erfindung ist es, eine Anordnung anzugeben, mit welcher die Überprüfung einer derartigen Schaltungsanordnung beim Einschalten möglich ist.

Diese Aufgabe wird bei der erfindungsgemäßen Anordnung dadurch gelöst, dass Mittel zur Messung des Spannungsverlaufs am Kondensator und zur Erzeugung einer Fehlermeldung, wenn der Spannungsverlauf außerhalb eines vorgegebenen Bereichs liegt, vorgesehen sind.

Die erfindungsgemäße Anordnung hat den Vorteil, dass Kondensator-Ausfälle schon beim Einschalten erkannt werden. Die Fehlermeldung kann in geeigneter Weise angezeigt, registriert oder in anderer Weise ausgewertet werden. Die erfindungsgemäße Anordnung hat ferner den Vorteil, dass praktisch kein zusätzlicher technischer Aufwand erforderlich ist. Als steuerbarer Schalter eignet sich in erster Linie ein Relais. Es sind jedoch auch andere Schalter, beispielsweise Halbleiterschalter, geeignet.

Eine Weiterbildung der erfindungsgemäßen Anordnung besteht darin, dass die Mittel ferner eine Fehlermeldung erzeugen, wenn der Spannungsanstieg schneller oder langsamer als mit einer oberen oder unteren vorgegebenen Geschwindigkeit erfolgt. Damit sind auch andere Fehler detektierbar, wie beispielsweise ein Ausfall der Stromquelle oder ein Kurzschluss oder ein zu hoher Strom in der angeschlossenen Leistungsendstufe.

Vorzugsweise ist bei der erfindungsgemäßen Anordnung vorgesehen, dass die Mittel von einem die Stromquelle und den steuerbaren Schalter steuernden Controller gebildet sind. Der erforderliche Analog/Digital-Wandler zur Spannungsüberwachung ist in der Regel in derartigen Controllern bereits integriert.

Die als Puffer-Kondensatoren geeigneten Kondensatoren weisen große Kapazitätstoleranzen auf. Daran kann die erfindungsgemäße Anordnung dadurch angeglichen werden, dass ein Speicher für mindestens eine vorgegebene Geschwindigkeit vorgesehen ist, die durch Ausmessen in der Fertigungsprüfung ermittelt ist.

Eine vorteilhafte Ausgestaltung der erfindungsgemäßen Anordnung besteht darin, dass die Mittel zur Erzeugung einer Fehlermeldung ein Modell des von der Stromquelle und dem mindestens einen Kondensator gebildeten Tiefpasses enthalten, dem die Betriebsspannung zuführbar ist und dessen Ausgangsspannung mit der Spannung an dem mindestens einen Kondensator verglichen wird, wobei die Fehlermeldung erzeugt wird, wenn eine unzulässig hohe Abweichung festgestellt wird.

Diese Ausgestaltung zeichnet sich dadurch aus, dass die Überwachung auch bei schwankender Betriebsspannung effektiv durchgeführt wird. Auch hierbei kann zur Berücksichtigung von Fertigungstoleranzen der Kondensatoren vorgesehen sein, dass bei einer Fertigungsprüfung der Anordnung gemessene Parameter des Modells in einem Speicher abgelegt sind.

Eine weitere Ausgestaltung der erfindungsgemäßen Anordnung, bei welcher ebenfalls Schwankungen der Betriebsspannung berücksichtigt werden, besteht darin, dass die Mittel zur Erzeugung einer Fehlermeldung einen Integrator enthalten, dem der durch die Stromquelle fließende Strom zugeführt wird und dessen Ausgangssignal durch die Spannung an dem mindestens einen Kondensator dividiert wird, wobei die somit erhaltene berechnete Kapazität mit einer Sollkapazität verglichen wird und die Fehlermeldung erzeugt wird, wenn eine unzulässig hohe Abweichung festgestellt wird.

Dabei können ebenfalls Toleranzen der Kapazitätswerte dadurch berücksichtigt werden, dass eine bei einer Fertigungsprüfung gemessene Kapazität des mindestens einen Kondensators in einem Speicher als Sollkapazität abgelegt ist.

Zur Vermeidung von Fehlermeldungen, die nicht auf einem tatsächlichen Fehler, sondern auf kurzfristigen Störungen, wie beispielsweise Spannungsspitzen auf dem Bordnetz, beruhen, kann bei der erfindungsgemäßen Anordnung vorgesehen sein, dass eine Gutmeldung ausgegeben wird, wenn nach mehrmaligem Vergleich keine Fehlermeldung vorliegt.

Die Erfindung lässt zahlreiche Ausführungsformen zu. Drei davon sind schematisch in der Zeichnung anhand mehrerer Figuren dargestellt und nachfolgend beschrieben. Es zeigt:
- Fig. 1:: ein Ausführungsbeispiel der erfindungsgemäßen Anordnung,
- Fig. 2 :: den Verlauf der Kondensator-Spannung beim Einschalten einer fehlerfreien Anordnung und als Folge zweier verschiedener Fehler,
- Fig. 3:: ein zweites Ausführungsbeispiel,
- Fig. 4:: eine Darstellung der Funktion des zweiten Ausführungsbeispiels,
- Fig. 5:: ein drittes Ausführungsbeispiel und
- Fig. 6:: dessen Funktion.

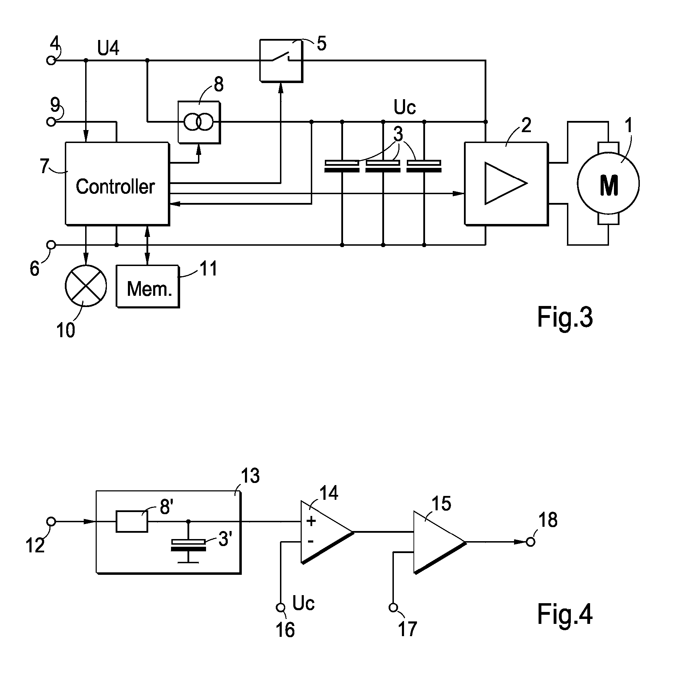

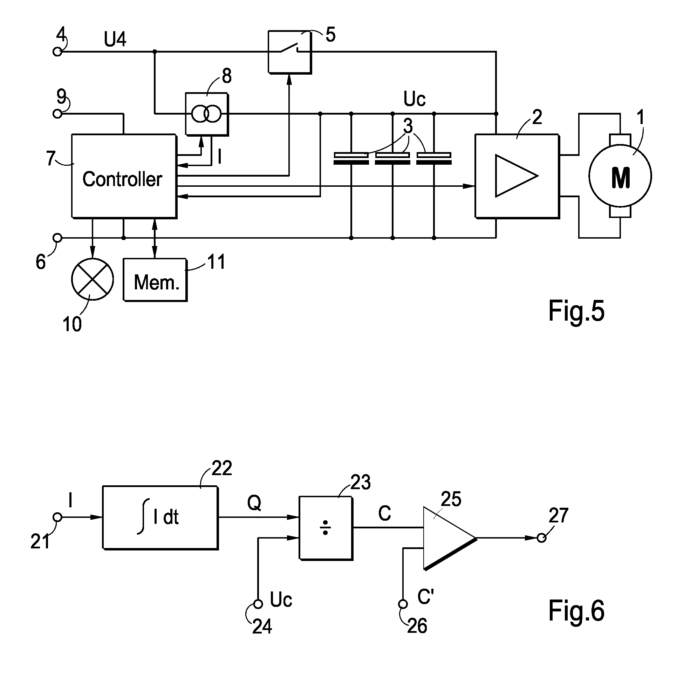

Gleiche Teile sind in den Figuren mit gleichen Bezugszeichen versehen. In den Figuren 4 und 6 sind im Controller realisierte Funktionen der Übersichtlichkeit halber als Blockschaltbilder dargestellt, werden jedoch üblicherweise durch Programme ausgeführt.

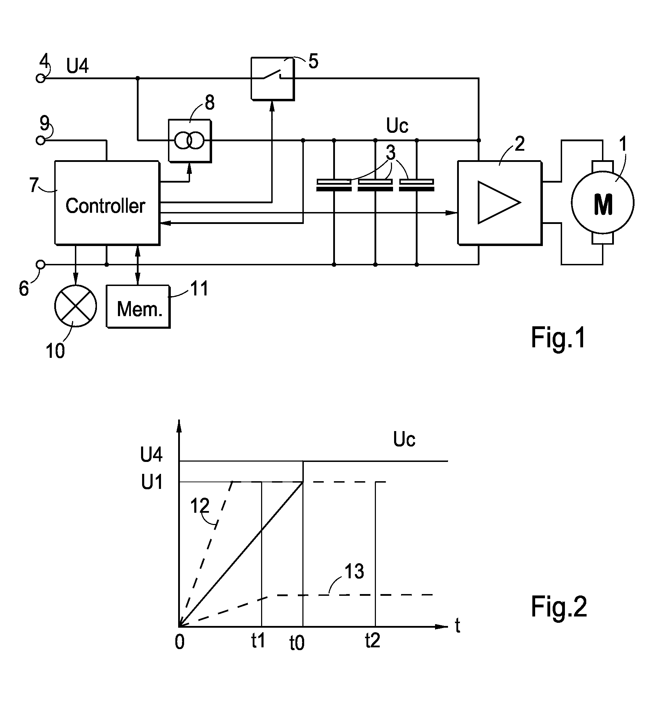

Bei dem in Fig. 1 dargestellten Ausführungsbeispiel wird ein Motor 1 von einer Leistungsendstufe 2 mit in der Regel pulsbreitenmodulierten Spannungen versorgt, wozu die Leistungsendstufe 2 von einem Controller 7 angesteuert wird. Wegen der erforderlichen Blindstromkompensation und auftretender Lastspitzen ist die Betriebsspannung der Leistungsendstufe 2 mit Elektrolytkondensatoren 3 gepuffert. Die Leistungsendstufe 2 und die Elektrolytkondensatoren 3 sind über ein Relais 5 und über einen Anschluß 4 mit der Betriebsspannung verbunden. Der andere Anschluß 6 für die Betriebsspannung ist im Kraftfahrzeug in der Regel mit Masse verbunden.

Wird die Schaltungsanordnung eingeschaltet, erhält zunächst der Controller 7 über einen Anschluß 9 Betriebsspannung, der eine Stromquelle 8 derart ansteuert, daß die Kondensatoren 3 mit einem begrenzten Strom aufgeladen werden, was als durchgezogene mit Uc bezeichnete Kurve in Fig. 2 dargestellt ist. Die am Kondensator anliegende Spannung Uc wird einem Analog-Eingang des Controllers 7 zugeführt, der in Abhängigkeit davon, ob die Spannung Uc einen vorgegebenen Wert U1 überschreitet, das Relais 5 einschaltet. Der Kondensator wird dann schlagartig auf die bei 4 zugeführte Betriebsspannung U4 aufgeladen. Der dabei entstehende Stromimpuls ist jedoch wesentlich kleiner als beim Einschalten der ungeladenen Kondensatoren 3, nämlich im Verhältnis (U4-U1)/U4.

Liegt die Kapazität der Kondensatoren 3 unterhalb eines zulässigen Wertes, steigt die Spannung schneller als vorgegeben an, was in Fig. 2 mit der gestrichelten Kurve 12 angedeutet ist. Der Mikrocontroller 7 stellt zum Zeitpunkt t1 fest, dass die Spannung U1 bereits vorzeitig erreicht ist und gibt eine Fehlermedlung aus, was in Fig. 1 mit einer Lampe 10 schematisch dargestellt ist.

Im Falle einer defekten Leistungsendstufe (Zweigpaarkurzschluss) steigt die Spannung 13 nur sehr langsam an oder erreicht nach sehr kurzer Zeit einen zu niedrigen aber stabilen Wert. Der Mikrocontroller erkennt, dass zum Zeitpunkt t2 die Spannung U1 noch nicht erreicht ist und gibt ebenfalls eine Fehlermeldung ab.

Ein nichtflüchtiger Speicher 11 wird bei der Fertigungsprüfung mit den vorgegebenen Geschwindigkeiten bzw. den Zeitpunkte t1 und t2 in Abhängigkeit von der jeweiligen Ist-Kapazität der Kondensatoren 3 getragen. Beim Einschalten werden diese Daten dann aus dem Speicher 11 ausgelesen und für den beschriebenen Vergleich verwendet.

Bei dem Ausführungsbeispiel nach Fig. 3 werden dem Controller 7 die Betriebsspannung U4 und - wie beim Ausführungsbeispiel nach Fig. 1 - die Spannung am Kondensator Uc zugeführt. Ein Programm im Controller 7 beinhaltet ein Modell 13 (Fig. 4) des von der Stromquelle 8 und den Kondensatoren 3 gebildeten Tiefpasses mit den Elementen 8' und 3'. Diesem Modell 13 wird von einem Eingang 12 die Spannung U4 zugeführt. Bei 14 wird die Differenz zwischen der Ausgangsgröße des Modells 13 und der bei 16 zugeführten Kondensatorspannung Uc gebildet. Die Differenz wird bei 15 mit einem bei 17 zugeführten die maximal zulässige Abweichung repräsentierenden Wert verglichen.

Ist die Differenz größer, wird bei 18 eine Fehlermeldung ausgegeben. Die Parameter des Modells können bei der Fertigungsprüfung ermittelt und im Speicher 11 abgelegt werden.

Bei dem in den Figuren 5 und 6 dargestellten dritten Ausführungsbeispiel wird dem Controller 7 außer der Kondensatorspannung Uc ein Maß für den Strom I zugeleitet. Dieses Maß für den Strom I wird einem Eingang 21 eines Integrators 22 zugeleitet. Das Integral des Stromes über die Zeit entspricht der Ladung Q, die in die Kondensatoren 3 fließt. Bei 23 wird die Ladung Q durch die bei 24 zugeführte Kondensatorspannung Uc dividiert. Das Ergebnis ist die Kapazität C, die bei 25 mit dem Sollwert C' verglichen wird, der aus dem Speicher 11 über einen Eingang 26 zugeführt wird. Im Falle von größeren Abweichungen wird bei 27 eine Fehlermeldung ausgegeben.

## Patentansprüche

1. Anordnung zur Prüfung einer Schaltungsanordnung mit einer Leistungsendstufe, insbesondere für Elektromotoren mit hoher Stromaufnahme, wobei die Leistungsendstufe und mindestens ein Puffer-Kondensator über einen steuerbaren Schalter mit einer Betriebsspannungsquelle verbunden sind, wobei eine einen begrenzten Strom liefernde Stromquelle unter Umgehung des steuerbaren Schalters an dem mindestens einen Kondensator angeschlossen ist und wobei eine Verzögerungseinrichtung vorgesehen ist, die den steuerbaren Schalter erst einschaltet, wenn der mindestens eine Kondensator mit Hilfe der Stromquelle etwa auf die Betriebsspannung aufgeladen ist, **dadurch gekennzeichnet, dass** Mittel (7) zur Messung des Spannungsverlaufs am Kondensator (3) und zur Erzeugung einer Fehlermeldung, wenn der Spannungsverlauf außerhalb eines vorgegebenen Bereichs liegt, vorgesehen sind.

2. Anordnung nach Anspruch 1, **dadurch gekennzeichnet, dass** die Mittel (7) ferner eine Fehlermeldung erzeugen, wenn ein Spannungsanstieg schneller oder langsamer als mit einer oberen oder unteren vorgegebenen Geschwindigkeit erfolgt.

3. Anordnung nach einem der Ansprüche 1 oder 2, **dadurch gekennzeichnet, dass** die Mittel von einem die Stromquelle und den steuerbaren Schalter steuernden Controller (7) gebildet sind.

4. Anordnung nach einem der vorhergehenden Ansprüche, **dadurch gekennzeichnet, dass** ein Speicher (11) für mindestens eine vorgegebene Geschwindigkeit vorgesehen ist, die durch Ausmessen in der Fertigungsprüfung ermittelt ist.

5. Anordnung nach Anspruch 1, **dadurch gekennzeichnet, dass** die Mittel zur Erzeugung einer Fehlermeldung ein Modell (13) des von der Stromquelle (8') und dem mindestens einen Kondensator (3') gebildeten Tiefpasses enthalten, dem die Betriebsspannung zuführbar ist und dessen Ausgangsspannung mit der Spannung an dem mindestens einen Kondensator (3) verglichen wird, wobei die Fehlermeldung erzeugt wird, wenn eine unzulässig hohe Abweichung festgestellt wird.

6. Anordnung nach Anspruch 5, **dadurch gekennzeichnet, dass** bei einer Fertigungsprüfung der Anordnung gemessene Parameter des Modells (13) in einem Speicher (11) abgelegt sind.

7. Anordnung nach Anspruch 1, **dadurch gekennzeichnet, dass** die Mittel zur Erzeugung einer Fehlermeldung einen Integrator (22) enthalten, dem der durch die Stromquelle (8) fließende Strom zugeführt wird und dessen Ausgangssignal durch die Spannung an dem mindestens einen Kondensator (3) dividiert wird, wobei die somit erhaltene berechnete Kapazität mit einer Sollkapazität verglichen wird und die Fehlermeldung erzeugt wird, wenn eine unzulässig hohe Abweichung festgestellt wird.

8. Anordnung nach Anspruch 7, **dadurch gekennzeichnet, dass** eine bei einer Fertigungsprüfung gemessene Kapazität des mindestens einen Kondensators (3) in einem Speicher (11) als Sollkapazität abgelegt ist.

9. Anordnung nach einem der Ansprüche 5 bis 8, **dadurch gekennzeichnet, dass** eine Gutmeldung ausgegeben wird, wenn nach mehrmaligem Vergleich keine Fehlermeldung vorliegt.
